# Europäisches Patentamt
## European Patent Office
### Office européen des brevets

(19)

(11) Veröffentlichungsnummer: **0 128 464**
**B1**

(12) # EUROPÄISCHE PATENTSCHRIFT

(45) Veröffentlichungstag der Patentschrift:
**04.01.89**

(51) Int. Cl.⁴: **G 01 B 7/00**

(21) Anmeldenummer: **84106196.3**

(22) Anmeldetag: **30.05.84**

(54) **Taststiftwechselhalter.**

(30) Priorität: **03.06.83 DE 3320127**

(43) Veröffentlichungstag der Anmeldung:
**19.12.84 Patentblatt 84/51**

(45) Bekanntmachung des Hinweises auf die Patenterteilung:
**04.01.89 Patentblatt 89/1**

(84) Benannte Vertragsstaaten:
**CH DE FR GB IT LI SE**

(56) Entgegenhaltungen:
**FR-A-2 384 230**
**GB-A-2 025 073**
**GB-A-2 047 133**
**GB-A-2 121 238**
**· US-A-3 869 799**

(73) Patentinhaber: **Firma Carl Zeiss, D-7920 Heidenheim (Brenz) (DE)**
(84) Benannte Vertragsstaaten: **CH DE FR IT LI SE**

(73) Patentinhaber: **CARL- ZEISS- STIFTUNG trading as CARL ZEISS, D-7920 Heidenheim (Brenz) (DE)**
(84) Benannte Vertragsstaaten: **GB**

(72) Erfinder: **Schneider, Horst, Amselweg 8, D-7923 Königsbronn (DE)**
Erfinder: **Zeeh, Reiner, Hans- Holbein- Strasse 49, D-7920 Heidenheim (Brenz) (DE)**
Erfinder: **Neumann, Hans Joachim, Bunsenstrasse 6, D-7082 Oberkochen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

EP 0 128 464 B1

### Beschreibung

Die Erfindung betrifft eine Aufnahme zur auswechselbaren Befestigung eines Taststifts bzw. einer Taststiftkombination am Tastkopf eines Koordinatenmeßgerätes. Derartige Aufnahmen sollen ein möglichst rasches und unkompliziertes Ansetzen der für die jeweilige Meßaufgabe erforderlichen Taststiftkombination ermöglichen.

Bisher ist es üblich den Taststift manuell in den Tastkopf einzuschrauben oder einzuspannen. Dies ist jedoch bei umfangreicheren automatisch gesteuerten Meßabläufen nachteilig, da es eine Bedienperson erfordert, deren einzige Aufgabe es ist in relativ großen Abständen die Taster auszuwechseln.

Zwar ist aus "American Machinist" Okt. 1982, Seite 152 - 153, ein Meßverfahren bekannt, bei dem die Meßmaschine selbst rechnergesteuert den Taster wechselt. Aus dieser Literaturstelle geht jedoch nicht hervor, wie die Aufnahme zur Befestigung des Tasters an der Maschine ausgestaltet ist. Jedenfalls ist nach diesem bekannten, automatischen Wechselverfahren eine Kalibrierung der Taststifte nach jedem Wechsel erforderlich, was den Meßablauf verlangsamt.

Aus der GB-PS-1 599 751 ist eine Aufnahme zur auswechselbaren Befestigung eines kompletten Tastkopfs an der Pinole einer Meßmaschine bekannt. Diese Aufnahme besteht aus einem Dreipunktlager an der Pinole, gegen das der Tastkopf mit Hilfe eines Spannhebels gezogen wird. Das Lager legt dabei die räumliche Lage der Taststifte mit hoher Genauigkeit eindeutig fest. Das Auswechseln der Tastköpfe erfolgt also bei diesem Gerät wieder durch Bedienpersonal, das den Spannhebel betätigen muß. Nachteilig ist außerdem der Umstand, daß infolge des Wechselns des kompletten Tastkopfes eine ganze Reihe verschiedener elektrischer Verbindungen zur Meßmaschine unterbrochen werden müssen.

In dem DE-GM-7 400 071 ist ein Tastkopf bekannt, dessen Taststift mit Hilfe von mehreren Permanentmagneten abnehmbar am Tastkopf befestigt ist. Hier dient die Magnetbefestigung als Kollisionsschutz. Nach einem Abfallen des Stiftes bei übermäßiger Belastung muß er von Hand wieder eingesetzt werden. Zur Durchführung eines automatischen Wechselvorganges ist diese Lösung nicht geeignet.

Aus der GB-A-2 025 073 ist eine Aufnahme zur auswechselbaren Befestigung eines kompletten Tastkopfes an einem Koordinatenmeßgerät bekannt, die eine Spanneinrichtung in Form einer elektrisch angetriebenen Gewindespindel besitzt. Diese Gewindespindel zieht den mit einem Morsekonus versehenen Tastkopf gegen das entsprechende Gegenlager in der Aufnahme des Meßgerätes. Diese Form der Aufnahme ist jedoch insbesondere bezüglich der Reproduzierbarkeit der Drehlage des eingewechselten Tastkopfes nicht sehr genau. Außerdem enthält die Spanneinrichtung eine Vielzahl ineinandergreifende bewegte Teile, was für einen automatisch gesteuerten Wechselvorgang nachteilig ist.

Es ist die Aufgabe der vorliegenden Erfindung, eine Aufnahme zur auswechselbaren Befestigung eines Taststifts bzw. einer Taststiftkombination zu schaffen, die mit möglichst wenigen bewegten Teilen auskommt, so daß der automatisch von der Maschine aus gesteuerte Wechselvorgang schnell und einfach erfolgen kann.

Diese Aufgabe wird durch eine Ausbildung gemäß den im Kennzeichen des Anspruches 1 angegebenen Maßnahmen gelöst.

Da die Spanneinrichtung aus einem Permanentmagneten und einem Elektromagneten besteht, dessen Feld dem des Permanentmagneten überlagerbar ist, ist die Zahl der bewegten Teile minimiert und dennoch verbraucht die Aufnahme in den Zeiten zwischen den Wechselvorgängen keinen Strom.

Die Betätigung der elektromagnetischen Spanneinrichtung kann automatisch durch den Rechner erfolgen, der die Bahnsteuerung der Meßmaschine und die Meßwertübernahme durchführt. Er ist lediglich so zu programmieren, daß er den Tastkopf der Maschine zu einem beispielsweise am Rande des Meßbereiches aufgebauten Magazin verfährt, in dem verschiedene Taststifte oder Taststiftkombinationen bereit gehalten werden, und dort die Spanneinrichtung zum Ablegen der nicht mehr benötigten Taststiftkombinationen oder zum Aufnehmen der neuen Taststiftkombination auslöst. Damit erübrigen sich manuell durchzuführende Arbeitsgänge beim Tasterwechsel.

Bei ausreichend genauer Ausbildung des Lagers, gegen das der Anschlußkörper gezogen wird, kann ein Kalibrieren der Tastkugeln nach dem Einwechseln der Taststiftkombination entfallen, bzw. genügt es eine solche Kalibrierung in größeren Abständen vorzunehmen, d.h. nicht nach jedem Wechselvorgang, wodurch Meßzeit eingespart wird.

Da die Spanneinrichtung aus einem Permanentmagneten und einem Elektromagneten besteht, dessen Feld dem des Permanentmagneten überlagerbar ist, ist die Zahl der bewegten Teile minimiert und dennoch verbraucht die Aufnahme in den Zeiten zwischen den Wechselvorgängen keinen Strom.

Der Permanentmagnet ist zweckmäßig gegen Federkraft in Richtung auf das Lager des Taststifts verschiebbar. Mit Hilfe dieser Feder ist eine stets sichere Trennung des Taststifts vom Tastkopf gewährleistet, so daß die Gefahr des "Klebenbleibens" aufgrund eines nicht vollständig kompensierten oder kompensierbaren Restmagnetfelds vermieden ist.

Es empfiehlt sich die Spanneinrichtung in die Aufnahme im Tastkopf einzubauen, da dann für jedes Meßgerät nur eine Spanneinrichtung

benötigt wird. Es ist jedoch ebenfalls möglich die Spanneinrichtung in den Anschlußkörper des Taststifts einzubauen, wenn durch herausgeführte Kontakte und entsprechende Gegenkontakte an dem verwendeten Taststiftmagazin ein sicheres elektrisches Schalten der Spanneinrichtung gewährleistet ist. Weiterhin ist es z. B. möglich nur den Permanentmagneten im Anschlußkörper unterzubringen und den Elektromagneten dem Magazin zuzuordnen

Das Lager am Tastkopf besteht zweckmäßig aus drei Zylinderkörpern, und das Gegenlager umfaßt taststiftseitig drei Kugelpaare, die sich mit ihren V-förmigen Zwischenräumen an die Zylinderkörper anlegen. Über ein solches, bereits als Knickstelle für Tastköpfe hinlänglich bekanntes Lager ist die Lage der Taststiftkombination relativ zum Tastkopf und demzufolge zum Koordinatensystem des Meßgeräts innerhalb eines Winkels von 120° eindeutig bestimmt. Um die Eindeutigkeit über den gesamten Winkelbereich von 360° sicherzustellen kann dem Lager eine Nut zugeordnet werden, in die beispielsweise eine am Anschlußkörper der Taststiftkombination angebrachter Stift eingreift oder umgekehrt

Die erfindungsgemäße Aufnahme eignet sich sowohl für schaltende Tastköpfe, die im Moment der Antastung ein impulsförmiges Signal abgeben, als auch für Tastköpfe vom sogenannten messenden Typ, der Meßwertgeber enthält, die ein der Auslenkung des beweglichen Tastkopfteils aus einer Nullposition heraus proportionales Signal liefern. Die Tastköpfe des letztgenannten Typs, wie beispielsweise der in der US-PS-3 869 799 beschriebene Taster, besitzen in der Regel einen motorischen Gewichtsausgleich, der Auslenkungen des Tasters nach dem Einwechseln vom Gewicht oder der Gewichtsverteilung her unterschiedlichen Taststiftkombinationen ausgleicht. Es ist nun zweckmäßig in der Aufnahme einen Schalter zu befestigen, der die Anwesenheit eines eingewechselten Taststifts feststellt, und der mit der Einheit des Taststifts verbunden ist, die den Gewichtsausgleich des Tastkopfs steuert.

Der Anschlußkörper der Taststiftkombination besteht vorteilhaft aus zwei gegeneinander verdrehbaren und in ihrer Lage fixierbaren Teilen, damit die Taststiftkombination in jede beliebige, vom Werkstück und der jeweiligen Meßaufgabe vorgegebene Winkellage gedreht werden kann.

Weitere vorteilhafte Ausgestaltungen der Erfindung ergeben sich aus der nachfolgenden Beschreibung von Ausführungsbeispielen anhand der Figuren 1 - 4 der beigefügten Zeichnungen. Dabei zeigt:

Fig. 1a eine Schnittzeichnung eines ersten Ausführungsbeispiels längs der Linie I - I in Fig. 3;

Fig. 1b eine detaillierte Ansicht einer der drei Lagergruppen 14/15 in Fig. 1;

Fig. 2 einen zweiten Schnitt des Ausführungsbeispiels aus Fig. 1 in einer um 90° gedrehten Ebene längs der Linie II - II in Fig. 3;

Fig. 3 einen Schnitt längs der Linie III - III in Fig. 1 bzw. in Fig. 2 bei abgenommenem Taststiftträger

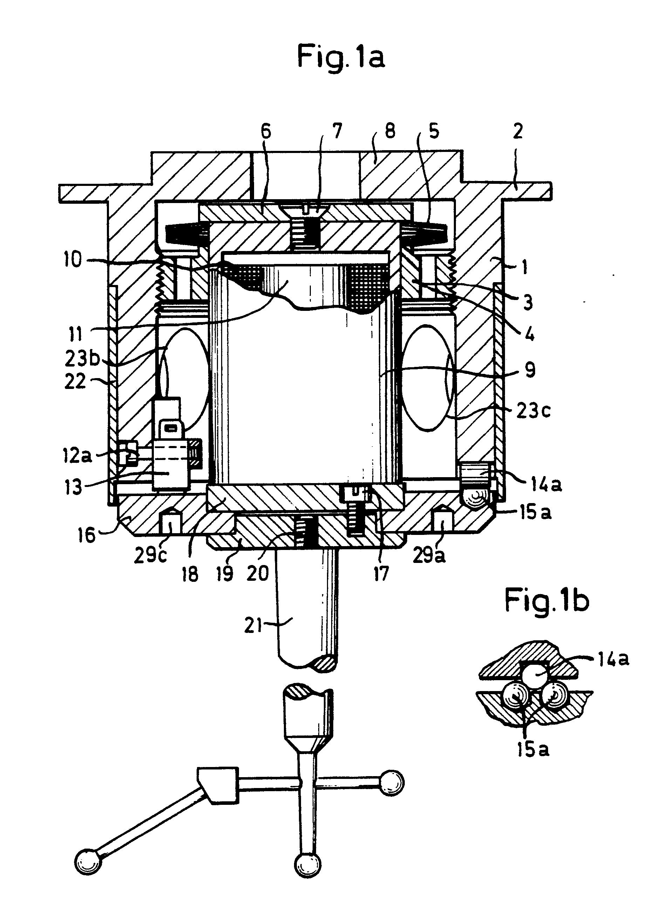

Die in den Fig. 1 - 3 dargestellte Aufnahme für die Taststiftkombination 21 besitzt ein zylindrisches Gehäuse 1, das mit einem Flansch 2 versehen ist, über den das Gehäuse 1 am auslenkbaren Teil eines hier nicht dargestellten Tastkopfes, beispielsweise am Teil 1 des in der US-PS-3 869 799 beschriebenen Tastkopfes befestigt ist.

In das Gehäuse 1 ist ein Ring 3 eingeschraubt, auf dem ein Paket aus mehreren Tellerfedern 5 aufliegt. Dieses Federpaket 5 drückt eine Halteplatte 6 in Richtung auf die obere Gehäusewand 8 der Aufnahme 1.

An der Halteplatte 6 ist mit Hilfe der Schraube 7 das Gehäuse 9 einer aus einem Elektromagneten 10 und einem Permanentmagneten 11 bestehenden Baueinheit befestigt.

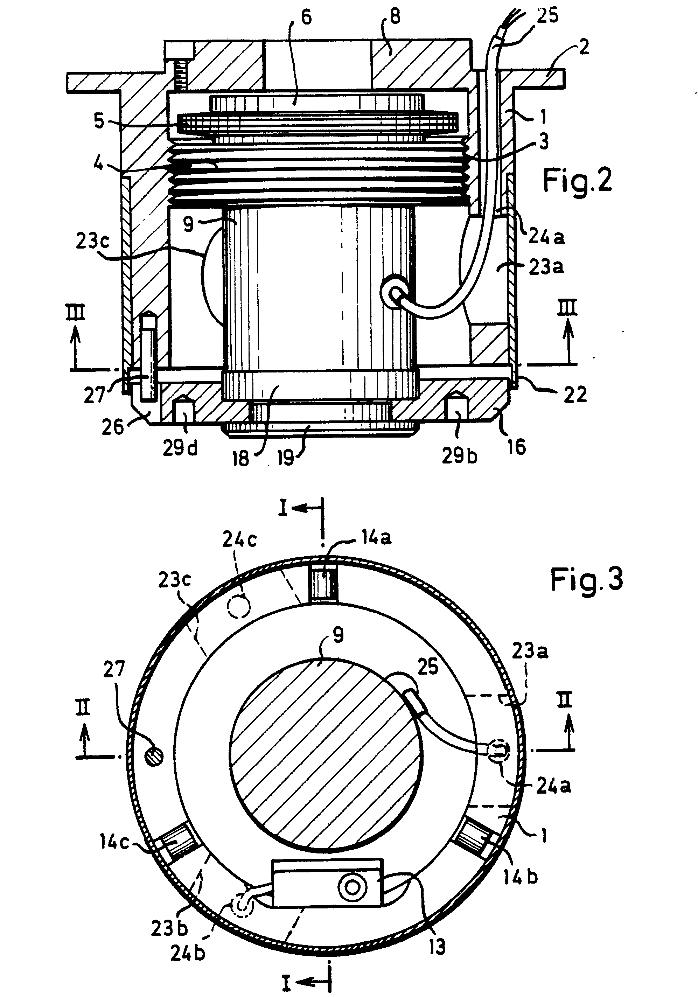

Wie aus Fig. 2 und 3 hervorgeht, besitzt das Gehäuse 1 drei radiale Öffnungen 23a,b und c, die von einem Ring 22 abgedeckt sind. In der Öffnung 23a endet eine vom Deckel 8 des Gehäuses 1 ausgehende Bohrung 24a, durch die das Anschlußkabel 25 des Elektromagneten 10 hindurchgeführt ist. Dieses Kabel 25 ist über den nicht dargestellten Tastkopf mit der Steuerung der Meßmaschine verbunden.

An seinem unteren Ende trägt das Gehäuse 1 der Aufnahme ein Lager, das aus drei in die Gehäusewand eingelassenen Zylinderkörpern 14a, 14b und 14c besteht, die um jeweils 120° gegeneinander versetzt angeordnet sind. Die Anordnung der Zylinderkörper ist aus Fig. 3 ersichtlich. Gegen dieses Lager stützt sich ein Ring 16 über drei Kugelpaare 15a - c ab, die, wie Fig. 1a für das Lager 14a/15a dargestellt, jeweils eine V-förmige Nut bilden, in der der Zylinderkörper 14 liegt. Weiterhin ist in das Gehäuse 1 ein Stift 27 eingelassen, der in einer Ausnehmung 26 in den Ring 16 eingreift. Durch diese Lagerung ist die räumliche Lage des Rings 16 relativ zu der mit dem Tastkopf verbundenen Aufnahme 1 eindeutig bestimmt, wobei der Stift 27 die Eindeutigkeit des Sitzes des Rings über den vollen Kreisumfang von 360° sicherstellt.

In den Ring 16 ist eine Platte 18 eingelassen, an der mit Hilfe dreier Schrauben 17 eine zweite Platte 19 befestigt ist. Die zweite Platte 19 trägt ein Gewinde 20, in das die Taststiftkombination 21 eingeschraubt ist. Der Ring 16 wird von den beiden Platten 18 und 19 nach dem Anziehen der Schrauben 17 geklemmt, so daß die Taststiftkombination 21 fest mit dem Ring 16 verbunden ist. Nach dem Lösen der Schrauben 17 lassen sich die Platten 18 und 19 gegen den Ring 16 verdrehen, so daß es möglich ist die Winkellage der im allgemeinen unsymmetrischen Taststiftkombination 21 relativ zum Ring 16 einzustellen.

Die Platten 18 und 19, der Ring 16 und die Kugelpaare 15 bilden den Anschlußkörper der Taststiftkombination. Dieser Anschlußkörper wird, da die Platte 18 aus Stahl besteht, von dem Permanentmagneten 11 gegen das aus den Zylinderkörpern 14a - c bestehende Lager gezogen. Bei einem automatisch gesteuerten Tasterwechsel wird der Elektromagnet 10 derart mit Gleichstrom beaufschlagt, daß ein zusätzliches Magnetfeld entsteht, dessen Betrag etwa dem des Permanentmagneten 11 entspricht, dessen Richtung aber entgegengesetzt ist, so daß das resultierende Gesamtfeld nahezu null wird. Dabei verschwindet die Haltekraft zwischen dem Magneten 10 und der Platte 18 und die Feder 5 drückt die Magnetkombination 9 nach oben, bis die Platte 6 an dem Gehäusedeckel 8 anliegt. Durch diese Bewegung des Bauteils 9 entsteht zwischen der Platte 18 und der Stirnfläche des Magneten 11 ein Spalt, der in seiner Dicke dem in Fig. 1 und 2 dargestellten Abstand zwischen der Platte 6 und dem Gehäusedeckel 8 entspricht. Der Anschlußkörper 16 - 19 fällt dann mit der daran befestigten Taststiftkombination aufgrund seines eigenen Gewichtes aus dem Lager heraus.

Eine mit einem gleichartigen Anschlußkörper versehene, andere Taststiftkombination kann dann aus einem Magazin entnommen werden, wenn die Meßmaschine die am Tastkopf befestigte Aufnahme 1 durch ein entsprechendes Programm gesteuert zu einem anderen Magazinplatz hinbewegt und über dem Anschlußkörper der gewünschten Taststiftkombination positioniert. Die Entnahme der Kombination aus dem Magazin kann im Prinzip ohne Betätigung des Elektromagneten 10 erfolgen, da der Anschlußkörper bei Annäherung des Permanentmagneten 11 unter einen vom Gewicht der Kombination abhängigen Maximalabstand selbständig gegen sein Lager gezogen wird. Es empfiehlt sich jedoch, bei der Entnahme der Kombination aus dem Magazin ebenfalls den Elektromagneten 10 einzuschalten und zwar derart gepolt, daß sein Feld das des Permanentmagneten 11 verstärkt, damit auch bei größeren Spaltbreiten zwischen der Platte 18 und dem Magneten 11 ein sicheres Aufnehmen der Kombination gewährleistet ist.

An der Innenseite des Gehäuses 1 ist am unteren Rand ein Mikroschalter 13 durch zwei Schrauben 12a und 12b befestigt. Der Mikroschalter wird von dem Ring 16 betätigt, sobald sich dieser an die Lagerkörper 14 anlegt. Durch den Schalter 19 kann beispielsweise der automatische Gewichtsausgleich des in der US-PS-3 869 799 beschriebenen Tastkopfs in Tätigkeit gesetzt werden. Das Anschlußkabel des Mikroschalters 19 ist durch die Bohrung 24b hindurchgeführt.

Das isostatische Dreipunktlager 14/15 im Ausführungsbeispiel nach Fig. 1 - 3 legt die räumliche Lage der Taststiftkombination relativ zum Tastkopf mit einer derartig hohen Wiederholgenauigkeit fest, daß ein separater Kalibriervorgang nach dem Wechseln der Taststiftkombination entfallen kann. Es kann vielmehr sofort mit der eingewechselten Taststiftkombination, deren Geometrie relativ zum Maschinenkoordinatensystem im Rechner gespeichert ist, das zu messende Werkstück angetastet werden. Dies führt insbesondere bei Meßaufgaben, die ein häufiges Tasterwechseln erfordern, zu einer erheblichen Meßzeitverkürzung.

**Patentansprüche**

1. Aufnahme zur auswechselbaren Befestigung des Tastelementes eines Koordinatenmeßgerätes mit einer elektrisch arbeitenden Spanneinrichtung, (9 - 11), die den Anschlußkörper (15 - 19) des Tastelementes (21) gegen ein Lager (14) in der Aufnahme (1) am Tastkopf zieht, dadurch gekennzeichnet, daß das Lager (14) die Lage des Tastelementes eindeutig bestimmt und die Spanneinrichtung aus einem Permanentmagneten (11) und einem Elektromagneten (10) besteht, dessen Feld dem des Permanentmagneten (11) überlagerbar ist.

2. Aufnahme nach Anspruch 1, dadurch gekennzeichnet, daß der Permanentmagnet (11) gegen Federkraft (5) in Richtung auf das Lager (14) verschiebbar ist.

3. Aufnahme nach Anspruch 1, dadurch gekennzeichnet, daß das Lager aus drei Zylinderkörpern (14a - c) besteht und das Gegenlager taststiftseitig drei Kugelpaare (15a - c) umfaßt, die sich mit ihren V-förmigen Zwischenräumen an die Zylinderkörper (14a - c) anlegen.

4. Aufnahme nach einem der Ansprüche 1 - 3, dadurch gekennzeichnet, daß dem Anschlußkörper (15 - 19) eine Nut (26) zugeordnet ist, in die ein an der Aufnahme (1) des Tastkopfs angebrachter Stift eingreift.

5. Aufnahme nach einem der Ansprüche 1 - 4, dadurch gekennzeichnet, daß in der Aufnahme (1) ein Schalter (13) befestigt ist, der vom Anschlußkörper (15 - 19) betätigt wird und mit einer Einheit im Tastkopf verbunden ist, die den Gewichtsausgleich des Tastkopfs steuert.

6. Aufnahme nach einem der Ansprüche 1 - 5, dadurch gekennzeichnet, daß der Anschlußkörper des Taststifts (21) aus zwei gegeneinander verdrehbaren und in ihrer Lage fixierbaren Teilen (15/16, 17 - 19) besteht.

7. Aufnahme nach einem der Ansprüche 1 - 6, dadurch gekennzeichnet, daß die Spanneinrichtung (9 - 11) in die Aufnahme (1) am Tastkopf eingebaut ist.

**Claims**

1. A holder for the interchangeable attachment of a probe element of a coordinate-measuring instrument, which holder comprises an electrically operating clamping device (9 - 11) adapted to draw the connecting member (15 - 19) of the probe element (21) against a reference support (14) in the holder, characterized by the fact that the support (14) unequivocally determines the position of the probe element, and that the clamping device consists of a permanent magnet (11) and of an electromagnet (10) whose field can be superposed on the field of the permanent magnet (11).

2. A holder according to claim 1, characterized by the fact that the permanent magnet (11) is displaceable against spring force (5) in the direction toward the support (14).

3. A holder according to claim 1, characterized by the fact that the support consists of three cylindrical bodies (14a - c) and that support-engaging means forming part of the probe element comprises three pairs of balls, which (15a - c) engage the cylindrical bodies (14a - c) with V-shaped spaces defined therebetween.

4. A holder according to one of the claims 1 - 3, characterized by the fact that the connecting member (15 - 19) has associated with it a locating groove (26) adapted for engagement with a pin on the holder (1).

5. A holder according to one of the claims 1 - 4, characterized by the fact that an electric switch (13) is carried by the holder (1), the switch being actuated by the connecting member (15 - 19) and being connected with a unit in the probe head which controls weight-balancing of the probe head.

6. A holder according to one of the claims 1 - 5, characterized by the fact that the connecting member of the probe element (21) consists of two parts (15/16, 17 - 19) which are rotatable with respect to each other and can be locked in a selected position of rotation.

7. A holder according to one of the claims 1 - 6, characterized by the fact that the clamping device (9 - 11) is mounted to the holder (1) on the probe head.

**Revendications**

1. Monture pour la fixation interchangeable de l'élément palpeur d'un appareil de mesure des coordonnées, comprenant un dispositif de fixation (9 - 11) travaillant électriquement, qui attire le corps de raccordement (15 - 19) de l'élément palpeur (21) contre une portée (14) ménagée dans la monture (1) de la tête de palpeur, caractérisée en ce que la portée (14) définit de façon univoque la position de l'élément palpeur et le dispositif de fixation est composé d'un aimant permanent (11) et d'un électroaimant (10) dont le champ peut être superposé à celui de l'aimant permanent (11).

2. Monture selon la revendication 1, caractérisée en ce que l'aimant permanent (11) peut être déplacé en translation dans le sens allant vers la portée (14), à l'encontre de la force d'un ressort (5).

3. Monture selon la revendication 1, caractérisée en ce que la portée est composée de trois corps cylindriques (14a - c) et la contre-portée solidaire de la touche comprend trois paires de pilles (15a - c) qui s'appuient contre les corps cylindriques (14a - c) par leurs fentes en forme de V.

4. Monture selon l'une des revendications 1 à 3 caractérisée en ce qu au corps de raccordement (15 - 19) est associée une rainure (26) dans laquelle s'engage une broche montée sur la monture (1) de la tête de palpeur.

5. Monture selon une des revendications 1 à 4, caractérisée en ce que, dans la monture (1), est fixé un interrupteur (13) qui est actionné par le corps de raccordement (15 - 19) et est relié à une unité prévue dans la tête de palpeur qui commande l'équilibrage du poids de la tête de palpeur.

6. Monture selon une des revendications 1 à 5, caractérisée en ce que le corps de raccordement de la touche (21) est composé de deux parties (15/16, 17 - 19) que l'on peut faire tourner l'une par rapport à l'autre et immobiliser dans leur position.

7. Monture selon une des revendications 1 à 6, caractérisée en ce que le dispositif de fixation (9 - 11) est logé dans la monture (1) portée par la tête de palpeur.

# Fig.1a

# Fig.1b

Fig.2

Fig.3